# EUROPEAN PATENT APPLICATION

(11) **EP 4 836 501 A1**
(43) Date of publication of application: **04.11.2026**
(21) Application number: 23962895.1
(22) Date of filing: 29.12.2023
(51) Int. Cl.: H04W 24/08, H04W 72/542

(54) **SENSING METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN)
(74) Representative: Penza, Giancarlo
(86) International application number: PCT/CN2023/143567
(87) International publication number: WO 2025/138221

(57) **Abstract**

The present application relates to the field of sensing, and discloses a sensing method and apparatus, a device, and a storage medium. The method is executed by a terminal device. The method comprises: on the basis of a difference between first sensing information and second sensing information, determining a first sensing result, the first sensing information corresponding to a first sensing resource, the second sensing information corresponding to a second sensing resource, and the first sensing resource being different from the second sensing resource. By means of removing the influence of clutter information in the environment, the accuracy of a sensing result can be improved, and the efficiency and success rate of a sensing service can be improved.

## Description

### TECHNICAL FIELD

The present disclosure relates to the field of sensing, and in particular to a sensing method, a sensing apparatus, a device, and a storage medium.

### BACKGROUND

In the natural environment, clutters that interfere with target echoes objectively exist, and the existence of clutters will affect the measurement of the sensing signal, resulting in inaccurate sensing results. Therefore, it is necessary to consider a sensing method for avoiding the influence of clutters, so as to improve the accuracy of sensing results.

### SUMMARY

Embodiments of the present disclosure provide a sensing method, a sensing apparatus, a device, and a storage medium. The technical solutions are as follows.

In an aspect of the embodiments of the present disclosure, there is provided a sensing method. The method is performed by the first node, and the method includes the following operation.

The first sensing result is determined according to a difference between the first sensing information and the second sensing information.

The first sensing information corresponds to the first sensing resource, the second sensing information corresponds to the second sensing resource, and the first sensing resource is different from the second sensing resource.

In an aspect of the embodiments of the present disclosure, there is provided a sensing method. The method is performed by the second node, and the method includes the following operation.

The first sensing result is received. The first sensing result is determined according to a difference between the first sensing information and the second sensing information.

The first sensing information corresponds to the first sensing resource, the second sensing information corresponds to the second sensing resource, and the first sensing resource is different from the second sensing resource.

In an aspect of the embodiments of the present disclosure, there is provided a sensing apparatus. The apparatus includes a processing module.

The processing module is configured to determine the first sensing result according to a difference between the first sensing information and the second sensing information. The first sensing information corresponds to the first sensing resource, the second sensing information corresponds to the second sensing resource, and the first sensing resource is different from the second sensing resource.

In an aspect of the embodiments of the present disclosure, there is provided a sensing apparatus. The apparatus includes a receiving module.

The receiving module is configured to receive the first sensing result. The first sensing result is determined according to a difference between the first sensing information and the second sensing information. The first sensing information corresponds to the first sensing resource, the second sensing information corresponds to the second sensing resource, and the first sensing resource is different from the second sensing resource.

In an aspect of the present disclosure, there is provided a sensing device. The communication device includes a processor; a transceiver connected to the processor; a memory for storing executable instructions for the processor. The processor is configured to load and execute the executable instructions to implement the sensing method as described above.

In an aspect of the present disclosure, there is provided a computer-readable storage medium. A computer program is stored in the computer-readable storage medium, and the computer program is configured to be executed by a processor to implement the sensing method described above.

In an aspect of the present disclosure, there is provided a chip. The chip includes programmable logic circuitry and/or program instructions for implementing the sensing method described above when the chip is run.

In an aspect of the present disclosure, there is provided a computer program product. The computer program product includes computer instructions stored in a computer-readable storage medium from which a processor reads and executes the computer instructions to implement the sensing method described above.

Based on the technical solutions provided by the embodiments of the present disclosure, the following beneficial effects can be brought.

Acquiring the first sensing result according to a difference between the first sensing information and the second sensing information is supported. Since the influence of the same part between the first sensing information and the second sensing information is removed when the first sensing result is determined, and the same part between the first sensing information and the second sensing information includes clutter information in the environment, the influence of the clutter information in the environment is also removed, which is beneficial to improving the accuracy of the sensing result and improving the efficiency and success rate of the sensing service.

### BRIEF DESCRIPTION OF THE DRAWINGS

In order to more clearly explain the technical solutions in the embodiments of the present disclosure, the following will briefly introduce the accompanying drawings that need to be used in the description of the embodiments. Obviously, the accompanying drawings in the following description are only some embodiments of the present disclosure, and for those with ordinary skill in the art, other drawings may be obtained based on these drawings without exerting creative efforts.
FIG. 1 illustrates a schematic diagram of wireless sensing modes provided by an exemplary embodiment of the present disclosure.
FIG. 2 illustrates a schematic diagram of an Integrated Sensing and Communications (ISAC) scenario provided by an exemplary embodiment of the present disclosure.
FIG. 3 illustrates a schematic diagram of a communication system architecture provided by an exemplary embodiment of the present disclosure.
FIG. 4 illustrates a schematic diagram of a communication system architecture provided by an exemplary embodiment of the present disclosure.
FIG. 5 illustrates a schematic flowchart of a sensing method provided by an exemplary embodiment of the present disclosure.
FIG. 6 illustrates a schematic flowchart of a sensing method provided by an exemplary embodiment of the present disclosure.
FIG. 7 illustrates a schematic flowchart of a sensing method provided by an exemplary embodiment of the present disclosure.
FIG. 8 illustrates a schematic diagram of a sensing method provided by an exemplary embodiment of the present disclosure.
FIG. 9 illustrates a schematic diagram of a sensing method provided by an exemplary embodiment of the present disclosure.
FIG. 10 is a schematic structural diagram of a sensing apparatus according to an exemplary embodiment of the present disclosure.
FIG. 11 is a schematic structural diagram of a sensing apparatus according to an exemplary embodiment of the present disclosure.
FIG. 12 illustrates a structural block diagram of a sensing device according to an exemplary embodiment of the present disclosure.

### DETAILED DESCRIPTION

In order to make the object, technical solutions, and advantages of the present disclosure more clear, embodiments of the present disclosure will be described in further detail below with reference to the accompanying drawings. Exemplary embodiments will be described in detail herein, examples of which are illustrated in the accompanying drawings. When the following description refers to the drawings, unless otherwise indicated, the same numerals in different drawings represent the same or similar elements. The embodiments described in the following exemplary examples do not represent all embodiments consistent with the present disclosure. Rather, they are merely examples of apparatus and methods consistent with some aspects of the present disclosure as detailed in the appended claims.

The terminology used herein is for the purpose of describing particular embodiments only and is not intended to limit the present disclosure. As used in the present disclosure and the appended claims, the singular forms of "an", "the" and "said" are also intended to include the plural forms unless the context clearly indicates otherwise. It should also be understood that the term "and/or" as used herein refers to and encompasses any or all possible combinations of one or more associated listed items.

It is to be understood that although the terms first, second, third, and the like may be used in the present disclosure to describe various information, such information should not be limited to such terms. These terms are used only to distinguish information of the same type from each other. For example, the first information may also be referred to as the second information without departing from the scope of the present disclosure, and similarly, the second information may also be referred to as the first information. Depending on the context, the word "if" as used herein may be interpreted as "at" or "when" or "in response to".

It should be understood that in various embodiments of the present disclosure, the sequence numbers of the above-described processes are not intended to limit the order of execution, and the execution order of each process should be determined by its function and inherent logic.

First, a communication technology according to the embodiments of the present disclosure will be described. The following related technologies may be arbitrarily combined with the technical solutions of the embodiments of the present disclosure as optional solutions, and all belong to the protection scope of the embodiments of the present disclosure.

Wireless communication and Sensing are two important applications of modern radio frequency technology. For sensing, the direct, reflected and scattered signals of radio waves are used to obtain the sensing of the environment and/or the target object information (such as attributes and states, etc.) in the environment, so as to complete the functions of positioning, ranging, speed measurement, imaging, detection, recognition, environment reconstruction, etc., and realize the sensing exploration of the physical world. Traditional sensing and wireless communication exist independently, and the separate design has a waste of wireless spectrum and hardware resources. When the spectrum of wireless communication moves towards millimeter wave, terahertz and visible light, the spectrum of wireless communication and the spectrum of sensing overlap more and more. If the two functions of wireless communication and sensing are integrated to support the same signal to complete the functions of communication and sensing at the same time, the spectrum utilization rate can be effectively improved. Moreover, there are more and more similarities between wireless communication and wireless sensing in system design, signal processing and data processing, etc. Using the same device to realize the functions of communication and sensing is also beneficial to reducing the cost of device.

In the integrated sensing and communications technology, functions of wireless communication and sensing are combined. The sensing function is implemented by using wireless resources of wireless communication. Widely deployed cellular networks may be utilized to implement sensing service in a wider range. A base station and multiple terminal devices (UE) may be used for joint sensing to implement higher sensing accuracy. The hardware module of wireless communication can be multiplexed to realize the sensing function and reduce the cost. In summary, the integrated sensing and communication technology makes the future wireless communication system have sensing capability, providing a foundation for the future development of smart transportation, smart city, smart factory, Unmanned Aerial Vehicle (UAV) and other services.

The future network is expected to be a fusion of mobile communication network, sensing network and computing power network. The narrow sense of sensing network refers to a system with the capabilities of target positioning (such as ranging, speed measurement, angle measurement, etc.), target imaging, target detection, target tracking and target recognition, while the broad sense of sensing network refers to a system with all services, networks, users and UEs, as well as the attributes and states of environmental objects.

From the perspective of whether the sensing node transmits electromagnetic waves, wireless sensing may be classified into passive sensing and active sensing. Passive sensing: the sensing node (such as network device or terminal device) senses by acquiring electromagnetic waves (such as terahertz waves) transmitted by the target object, or the sensing node reflects electromagnetic waves from other than the sensing node and the target object for sensing, such as passive imaging sensing technology. Active sensing: the sensing sending node (such as network device or terminal device) sends electromagnetic waves. After being reflected by the target object, the sensing receiving node receives echoes for sensing, such as the active radar sensing technology that transmits detection signals. The sensing receiving node and the sensing sending node are not necessarily the same, that is, the active sensing may be implemented by some form of joint processing between multiple nodes of the sensing party.

From the perspective of sensing requirements, wireless sensing may be classified into Per-Area ISAC scenario dominated by a sensing region and Per-Object ISAC scenario dominated by a sensing target. Sensing requirement is ubiquitous in thousands of industries. A scenario in which the real-time states of roads, vehicles and people need to be sensed efficiently in factories, roads, low altitude, cities and even a larger space-time range may be called Per-Area ISAC scenario. A scenario in which the sensed object is continuously sensed and tracked by using ISAC technology to obtain dynamic monitoring of the state of the sensed object may be called Per-Object ISAC scenario.

From the perspective of whether the sensing target has the capability of receiving or transmitting signals, wireless sensing may be classified into Device-Based ISAC scenario and Device-Free ISAC scenario. For example, in flight path management, the sensing target is a UAV, which has the capability of receiving or transmitting signals, and in beam management of base stations and terminals, the sensing target is a terminal, which also has the capability of transmitting or receiving signals. Therefore, flight path management and beam management of base stations and terminals belong to Device-Based ISAC scenario. For another example, since the sensing target in weather monitoring is rainwater, which does not have the capability of receiving or transmitting signals, and the sensing target in respiratory monitoring is a human, which does not have the capability of transmitting or receiving signals, weather monitoring and respiratory monitoring belong to a Device-Free ISAC scenario.

From the perspective of sensing applications, sensing may include the following classifications:
Outdoor/wide area/local area applications: including smart cities (such as weather monitoring, etc.), smart transportation/high-speed rail (such as construction of high-precision maps, road supervision, intrusion detection, etc.), low-altitude applications (such as UAV monitoring and obstacle avoidance, flight intrusion detection, flight path management, etc.), etc.;
- Indoor/local applications: including smart home and health management (such as, respiratory monitoring, intrusion detection, gesture/gesture recognition, motion monitoring, movement trajectory tracking, etc.), smart factories (such as intrusion detection, material detection, item defect detection, etc.), etc.

It may be understood that the above is merely an exemplary classification of some sensing applications, and the scope of the application of sensing is not limited to the above examples.

For example, in the intelligent transportation scenario, the realization of the sensing of the road environment is supported, which effectively realizes the construction of high-precision maps, and provides over-the-horizon assistance for the safe operation of autonomous vehicles; supports all-round, all-weather and uninterrupted detection of moving trajectory and moving speed of moving vehicles, and uploads the sensing information to the processing center, thereby comprehensively improving the intelligent sensing capability of expressway operation status, and providing data support for road supervision, and the realization of the sensing of railway track environment is supported, thereby realizing all-weather foreign object intrusion detection around high-speed rail.

For example, in the smart low-altitude scenario, all-round and multi-angle sensing of airspace is supported and the sensing result is provided to the UAV, which can provide redundancy for obstacle avoidance early warning and improve the success rate of UAV obstacle avoidance, and all-airspace sensing is supported, UAVs that invade the supervision range are located and tracked, and then UAV intrusion monitoring is implemented for fixed areas.

For example, in a smart life scenario, respiration monitoring, fitness monitoring, gesture/gesture recognition, etc. are supported by sensing changes in wireless channels, measuring the signal link attenuation in the communication link is supported, and then the relationship analysis between the signal link attenuation and the weather index is used to obtain the corresponding weather index and weather monitoring is performed.

For example, in the intelligent network scenario, obtaining information such as the density and location of idle terminal devices in the cell is supported, thereby assisting the energy saving of base stations and the optimization of resource scheduling of the base station in the cell.

For example, in the intelligent traffic scenario, continuous tracking of vehicles is supported, and real-time dynamic monitoring of vehicle status is implemented. For vehicles with wireless communication capabilities, vehicle sensing accuracy may also be improved by vehicle cooperative sensing.

For example, in the intelligent low-altitude scenario, the positioning and tracking of UAVs that invade the supervision range are supported, and then action is taken to drive away unauthorized UAVs. For networked UAVs with wireless communication capabilities, the flight status of UAVs, roadblocks in the flight route, etc. may also be identified through UAV cooperative sensing, and auxiliary flight services may be provided.

For example, in a smart life scenario, a specific human body is monitored for breathing, fitness monitoring, gesture/gesture recognition, etc. by carrying a terminal device with communication capability, based on a working mode of cooperation between a base station and a terminal device, self-transmitting and self-receiving of the terminal device, or cooperation between the terminal devices, so as to realize accurate real-time dynamic monitoring.

For example, in the smart network scenario, assistance in improving beam management and channel estimation accuracy is supported, thereby improving beam tracking timeliness of the terminal device, improving channel estimation accuracy and reducing feedback overhead.

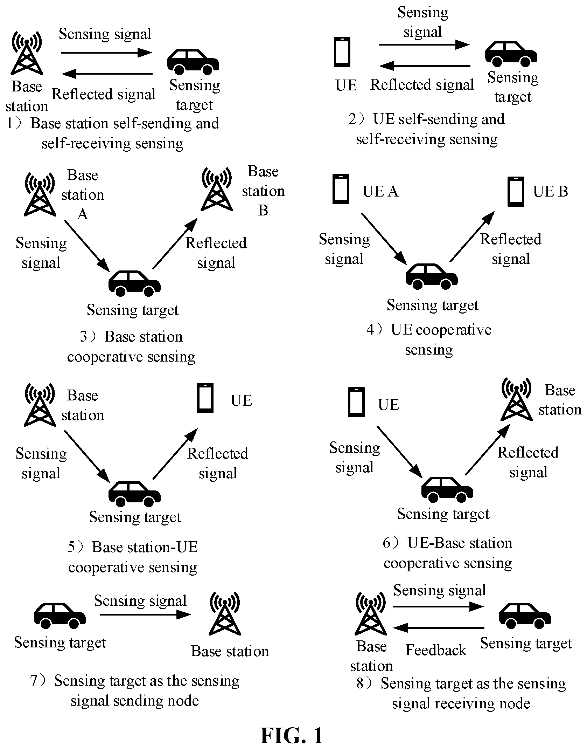

The main wireless Sensing modes of integrated sensing and communications technology include 8 types, as illustrated in FIG. 1:
1) Base station self-sending and self-receiving sensing: the base station sends sensing signals and receives reflected signals;
2) UE self-sending and self-receiving sensing: UE sends sensing signals and receives reflected signals;
3) Base station cooperative sensing: Base station A sends a sensing signal, and base station B receives a reflected signal;
4) UE cooperative sensing: UE A sends a sensing signal and UE B receives a reflected signal;
5) Base station-UE cooperative sensing: the base station sends a sensing signal, and the UE receives a reflected signal;
6) UE-base station cooperative sensing: the UE sends a sensing signal and the base station receives a reflected signal;
7) The sensing target is a sensing signal sending node, that is, the sensing target sends a sensing signal;
8) The sensing target is a sensing signal receiving node, that is, the sensing target receives a sensing signal. Alternatively, the sensing target further feeds back sensing information.

In the embodiments of the present disclosure, the sensing mode may also be referred to as a sensing method.

In the embodiments of the present disclosure, a Sensing Signal refers to a Signal for acquiring a sensing result, and may also be understood as a Signal for performing a sensing service. The sensing signal may be a signal dedicated to sensing service or may be a general-purpose signal. The sensing signal may be a data signal or a reference signal, such as a Positioning Reference Signal (PRS), a Demodulation Reference Signal (DMRS), a Sounding Reference Signal (SRS), an Enhanced-SRS (E-SRS), a Carrier Phase Reference Signal (CPRS), a Channel State Information Reference Signal (CSI-RS), and the like, and all Reference signals are not listed here. The sensing signal may also be referred to as a sensing measurement signal, a Sensing Reference signal (Sensing RS). In the embodiments of the present disclosure, "sensing measurement signal", "sensing reference signal" and "sensing signal" are usually interchangeably, but those skilled in the art may understand their meanings, and "sensing measurement signal" and "sensing reference signal" may be replaced with "sensing signal".

The sending node of the sensing signal and the receiving node of the sensing signal may be collectively referred to as a sensing node. Among the eight sensing modes illustrated in FIG. 1, there is only a single sensing node or a pair of sensing nodes, while in a wireless communication system, the number of UEs (such as mobile phones, Internet of Things devices, etc.) is large. When there are multiple sensing nodes (i.e., base stations, mobile phones, IoT devices, etc. that can send and/or receive sensing signals) around a sensing target, the joint sensing of multiple sensing nodes in sensing will improve the accuracy of sensing, and can meet more complex sensing service requirements, and realize richer sensing services. When there are multiple sensing nodes in the communication system, there may be one sensing control node to control and manage the whole sensing service to improve efficiency. The sensing control node may be a base station, UE, or a core network element.

In some embodiments, the sensing control node is configured to perform at least one of: managing sensing services, sending configuration information to the sensing node, or sending configuration information to a sensing target. The configuration information sent by the sensing control node is used for at least one of following: configuring the sending of the sensing signal, configuring the receiving of the sensing signal, configuring reporting a measurement result by a sensing node, configuring reporting a sensing result by a sensing node, configuring reporting a measurement result by a sensing target, configuring reporting a sensing result by a sensing node, configuring sensing measurement information to the sensing node, or configuring sensing measurement information to the sensing target.

Alternatively, the sensing control node is a separate entity distinguished from the sensing node and the sensing target. Alternatively, the sensing control node and the sending node of the sensing signal are the same entity. Alternatively, the sensing control node and the receiving node of the sensing signal are the same entity. Alternatively, the sensing control node and the sensing target are the same entity.

Alternatively, the sending node of the sensing signal and the receiving node of the sensing signal may be the same entity, and the reference is made to mode 1) and mode 2) illustrated in FIG. 1. Alternatively, the sending node of the sensing signal and the receiving node of the sensing signal may be different entities.

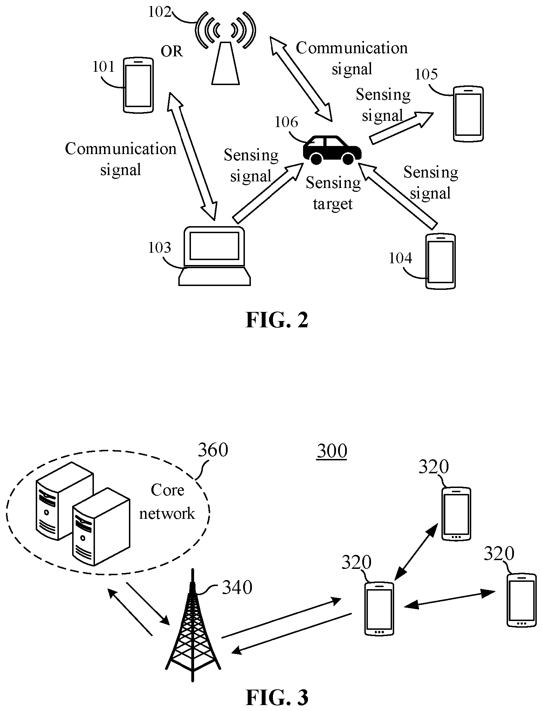

FIG. 2 illustrates a schematic diagram of an ISAC scenario in which multiple sensing nodes participate in sensing. The UE 101 or the base station 102 may act as a sensing control node to control and manage sensing services through communication signals, the UE 103, the UE 104, and the UE 105 are sensing nodes, and the sensing signals are transmitted between the sensing nodes and the sensing target 106 to perform sensing services.

In the natural environment, clutters that interfere with target echoes objectively exist, and the existence of clutters will affect the measurement of the sensing signal, resulting in inaccurate sensing results. Therefore, it is necessary to consider a sensing method for avoiding the influence of clutters, so as to improve the accuracy of sensing results.

FIG. 3 is a schematic architectural diagram of a communication system 300 according to an exemplary embodiment of the present disclosure. As illustrated in FIG. 3, the communication system 300 may include at least one of following: User Equipment (UE) 320, an access network device 340, a Core Network (CN) 360, or a data network (not shown). Among them, the UE 320, the access network device 340, and the core network 360 may be logically divided into two parts: a user plane and a control plane. The control plane is responsible for the management of the mobile network and the user plane is responsible for the transmission of service data.

The UE 320 is a portal for mobile users to interact with the network, can provide basic computing and storage capabilities, display service windows to users, and accept user operation inputs. The UE 320 establishes a signal connection and a data connection with the access network device 340 by using some air interface technology, thereby transmitting control signals and service data to the mobile network. The UE 320 may also be referred to as a user device, or an access terminal, or a user unit, or a user station, or a mobile station, or a mobile stage, or a remote station, or a remote terminal, or a mobile device, or a user terminal, or a terminal, or a wireless communication device, or a user agent, or a user device. The UE 320 may be deployed on land, on water, in the air, and the like, and includes, but is not limited to, a handheld device, a wearable device, a vehicle-mounted device, an Internet of Things device, and the like, such as an electronic tag, a Mobile phone, a tablet computer, an e-book reader, a laptop computer, a desktop computer, a television, a game console, a Station (STA), a Mobile Internet Device (MID), an Augmented Reality (AR) terminal, a Virtual Reality (VR) terminal, and a Mixed Reality (MR) terminal, a wearable Device, a handle, a controller, a wireless terminal in Industrial Control, a wireless terminal in Self Driving, a wireless terminal in Remote Medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), etc. There may be multiple UEs 320 typically, and one or more UEs 320 may be distributed in a cell managed by each access network device 340. In the embodiments of the present disclosure, "terminal device" and "UE" are generally interchangeably, but the meaning thereof can be understood by those skilled in the art.

The multiple UEs 320 may communicate with each other through some kind of direct communication interface, such as a PC5 interface. In some embodiments, communication between multiple UEs 320 is referred to as sidelink communication.

The access network is used to implement access-related functions, can provide network access functions for authorized users in the coverage area of the cell, and can transmit user data by using transmission tunnels with different quality according to the level of users, service requirements, etc. The access network can manage its own resources, make rational use of them, provide access services for the UE 320 on demand, and forward control signals and user data between the UE 320 and the core network 360. The access network device 340 is a device deployed in the access network to provide wireless communication functions for the UE 320, and may include a Radio Access Network (RAN) device and/or AN device. The RAN device is mainly a wireless network device in a 3GPP network, and the AN device may be an access network device not defined by the 3GPP. In systems employing different wireless access technologies, the name of the "access network device" may vary. The access network device 340 includes, but is not limited to, an Evolved Node B (eNB), a Radio Network Controller (RNC), a Node B (NB), a Base Station Controller (BSC), a Base Transceiver Station (BTS), a Home Base Station (for example, Home Evolved Node B, or Home Node B (HNB)), a Baseband Unit (BBU), an Access Point (AP) in a Wireless Fidelity (Wi-Fi) system, a Wireless relay node, a Wireless backhaul node, a Transmission Point (TP) or a Transmission and Reception Point (TRP), a Next Generation Node B (gNB) or a TRP or a TP in a Fifth Generation (5G) mobile communication system, or one antenna panel or a group of antenna panels (including multiple antenna panels) of a base station in a 5G system, or a network node constituting a gNB or a Transmission Point, such as a Baseband Unit (BBU) or a Distributed Unit (DU), or a base station in a Beyond Fifth Generation (B5G) mobile communication system, a sixth Generation (6G) mobile communication system, or the like, or a reader/writer of a Radio Frequency Identification (RFID) system. In some embodiments, an access network device may also be referred to as a network device.

The core network 360 is responsible for maintaining the subscription data of the mobile network, managing the network elements of the mobile network, and providing functions such as session management, mobility management, policy management, and security authentication for the UE 320. For example, when the UE 320 is attached, network access authentication is provided for the UE 320, when the UE 320 has a service request, network resources are allocated to the UE 320, when the UE 320 moves, network resources are updated for the UE 320, when the UE 320 is idle, a fast recovery mechanism is provided for the UE 320, when the UE 320 is de-attached, network resources are released for the UE 320, when the UE 320 has service data, data routing functions are provided for the UE 320, such as forwarding uplink data to a Data Network (DN); or receiving downlink data sent to the UE 320 from the data network and forwarding to the access network device 340, so as to send the downlink data to the UE 320. The core network 360 may be deployed in a Private Network or a Public Network. The network elements deployed in the core network are called core network elements, and the core network elements may also be regarded as functional entities. One or more core network elements may be deployed on a physical device.

Data networks are used to provide business services to users. The data network may be a private network, such as a local area network. It may also be an external network that is not controlled by the operator, such as the Internet. It may also be a private network deployed jointly by operators, such as IP Multimedia Core Network Subsystem (IMS). The UE 320 may access the data network through an established Protocol Data Unit (PDU) session.

In some embodiments, there are two communication scenarios in the communication system 300: an uplink communication scenario and a downlink communication scenario. The uplink communication refers to transmitting signals in the direction of the UE 320, the access network device 340, the core network 360, and the data network. The downlink communication refers to transmitting signals in the direction of the data network, the core network 360, the access network device 340, and the UE 320.

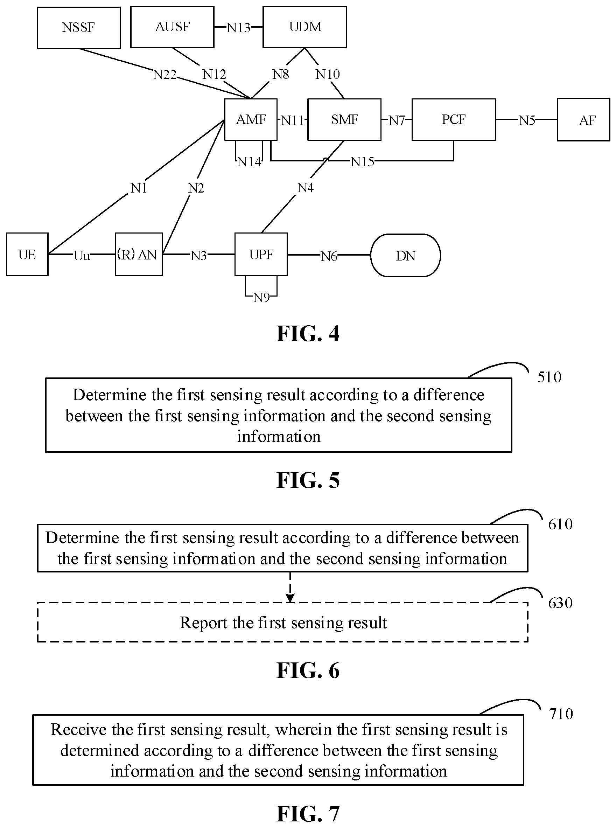

FIG. 4 is a detailed architecture determined on the basis of FIG. 3. The architecture includes UE, (R)AN, core network elements, and a DN. Theoretically, the architecture may be divided into two parts: the user plane and the control plane. The control plane is responsible for the management of the mobile network, and the user plane is responsible for the transmission of service data. In FIG. 4, the NG2 reference point is located between the (R)AN control plane and the core network control plane, the NG3 reference point is located between the (R)AN user plane and the core network user plane, and the NG6 reference point is located between the core network user plane and the data network.

The core network user plane includes the following core network elements: a User Plane Function (UPF).

The core network control plane includes at least one of following core network elements: a Location Management Function (LMF), a Sensing Function (SF), an Authentication Server Function (AUSF), an Access and Mobility Management Function (AMF), a Session Management Function (SMF), Network Slice Selection Function (NSSF), Network Exposure Function (NEF), Network Repository Function (NRF), Unified Data Management (UDM), Policy Control Function (PCF), or Application Function (AF).

The UPF is not only responsible for forwarding and receiving user data, but also has related functions of domain name query. The AMF is mainly responsible for mobility management in mobile networks, such as user location update, user registration network, user switching, etc. The SMF is mainly responsible for session management in mobile networks, such as session establishment, modification and release. The PCF is mainly supports providing a unified policy framework to control network behavior, providing policy rules to control layer network functions, and is responsible for obtaining user signing information related to policy decision. The AUSF is used to perform security authentication of the terminal. The NEF is mainly used to support the opening of capabilities and events. The NRF is used for providing a storage function and a selection function of network function entity information for other network elements. The UDM is used for storing user data, such as signing data, authentication/authorization data, and the like. The AF interacts with the core network for providing application layer services, such as providing data routing about the application layer, providing access network capability opening functions, interacting with the policy framework to provide policy control, interacting with the IMS, and the like. The LMF is responsible for the location services of the UE, such as location calculation, location management, positioning, etc.

The SF is used to provide sensing services for the UE and/or access network devices to support the sensing functions of the cellular network. For example, when the application sends a sensing request for a sensing target to the core network, the core network selects an appropriate access network device or sensing node through SF or AMF, triggers a sensing-related wireless measurement, and obtains a sensing result through the measured sensing information.

In some embodiments, the SF may be set in the core network to implement the sensing function, or the sensing function may be implemented by the LMF in the core network without adding the SF. That is, the sensing service according to the embodiments of the present disclosure may be realized by SF or LMF. That is, the embodiment of the present disclosure supports setting the LMF dedicated to the positioning service and the SF dedicated to the sensing service, and also supports giving the LMF the positioning function and the sensing function.

In the architecture illustrated in FIG. 4, the N1 interface is a reference point between the UE and the AMF, the N2 interface is a reference point for RAN and AMF, and is used for sending non-access Stratum (NAS) messages, etc., the N3 interface is a reference point between the RAN and the UPF, and is used to transmit data of the user plane, etc., the N4 interface is a reference point between the SMF and the UPF, and is used for transmitting information such as tunnel identification information, data buffer indication information, and downlink data notification messages of the N3 connection, and the N6 interface is a reference point between the UPF and the DN, and is used to transmit data of the user plane, etc. The NG interface is the interface between the RAN and the CN.

The names of respective core network elements (for example, SF, LMF, SMF, AF, UPF, and the like) are merely examples, and do not limit the functions of the network elements themselves. In the network in the related art and other networks in the future, each of the above-mentioned network elements may also have other names, and the embodiments of the present disclosure are not particularly limited thereto. For example, in the B5G and 6G networks, some or all of the above-mentioned network elements may follow the terminology of the 5G network, other names may be adopted, and the description thereof will be unified here and will not be repeated hereinafter. In addition, it should be understood that in some embodiments of the present disclosure, the names of messages (or signaling) transmitted among the terminal device, the access network device, and various network elements of the core network are merely examples, and the functions of the messages (or signaling) themselves are not limited in any way, and respective message (or signaling) may adopt other names.

FIG. 5 illustrates a schematic flowchart of a sensing method provided by an exemplary embodiment of the present disclosure. The method is performed by the first node, and the method at least includes the following operation.

In operation 510, the first sensing result is determined according to a difference between the first sensing information and the second sensing information.

In some embodiments, the first node is a receiving node of a sensing signal, or the first node is a sensing control node.

In some embodiments, the first node may be a terminal device as illustrated in FIG. 1 to FIG. 4, an access network device (such as a base station) as illustrated in FIG. 1 to FIG. 4, or a core network element (such as SF and LMF) as illustrated in FIG. 3 and FIG. 4.

In some embodiments, the first sensing information corresponds to the first sensing resource, the second sensing information corresponds to the second sensing resource, and the first sensing resource is different from the second sensing resource.

In some embodiments, the sensing resource includes at least one of following: a time domain resource, a frequency domain resource, or a spatial domain resource. Exemplarily, the first sensing resource includes at least one of following: the first time domain resource, the first frequency domain resource, or the first spatial domain resource. Exemplarily, the second sensing resource includes at least one of following: the second time domain resource, the second frequency domain resource, or the second spatial domain resource. Alternatively, the sensing resource may further include a code domain resource, and the code domain resources included in the first sensing resource and the second sensing resource are the same or different.

Alternatively, the first time domain resource is different from the second time domain resource, the first frequency domain resource is the same or different from the second frequency domain resource, and the first spatial domain resource is the same or different from the second spatial domain resource. Alternatively, the first frequency domain resource is different from the second frequency domain resource, the first time domain resource is the same or different from the second time domain resource, and the first spatial resource is the same or different from the second spatial resource. Alternatively, the first spatial resource is different from the second spatial resource, the first time domain resource is the same or different from the second time domain resource, and the first frequency domain resource is the same or different from the second frequency domain resource.

In some embodiments, the first sensing information is determined according to a measurement result of the first signal in the first sensing resource, and it may be understood that the first sensing information includes the measurement result of the first signal in the first sensing resource. The second sensing information is determined according to a measurement result of the first signal in the second sensing resource, and it may be understood that the second sensing information includes the measurement result of the first signal in the second sensing resource.

The difference between the first sensing information and the second sensing information may be understood as difference information between the first sensing information and the second sensing information. Therefore, the first sensing result may be considered to be determined according to a difference between the measurement result of the first signal in the first sensing resource and the measurement result of the first signal in the second sensing resource. It may be understood that the first sensing result is determined according to different transmission situations of the first signal in the first sensing resource and the second sensing resource. Information of the sensing target may be obtained by analyzing different parts of the measurement results of the first signal in the first sensing resource and the second sensing resource, that is, the first sensing result may be obtained. The first sensing result is a sensing result corresponding to the sensing target.

The same part between the first sensing information and the second sensing information may reflect environmental information, which includes clutter information. The first sensing result is determined according to the difference between the first sensing information and the second sensing information. That is to say, when the first sensing result is determined, the common part between the first sensing information and the second sensing information is eliminated, that is, the negative influence of the clutter information is eliminated, and thus it may also be regarded as a calibration operation on the sensing information.

In some embodiments, as described above, the sensing target may be a device having a signal reception and/or sending capability, such as a UAV or a UE, or an object not having signal reception and sending capability, such as a human body, an animal, a plant, rainwater, or the like.

In some embodiments, the first signal is used to acquire the first sensing result, and it may be understood that the first signal is used to perform sensing services. The first signal may be referred to as a sensing signal, or may be referred to as a sensing measurement signal, a sensing reference signal, or the like.

In some embodiments, the first sensing result includes at least one of the following: speed, delay, Doppler frequency shift, angle, signal strength, distance, orientation, acceleration, complex result of received signal or channel response, amplitude, phase, I path/Q path and related calculation results thereof, whether a target exists, spatial position, trajectory, motion, expression, vital signs, quantity, imaging result, weather, air quality, shape, material, composition, and the like.

In some embodiments, sensing may be equivalent to or replaced with at least one of: positioning, ranging, speed measurement, angle measurement, target imaging, target detection, target tracking, target recognition.

In summary, the method provided by the embodiments of the present disclosure supports acquiring the first sensing result according to a difference between the first sensing information and the second sensing information. Since the influence of the same part between the first sensing information and the second sensing information is removed when the first sensing result is determined, the influence of the clutter information in the environment is removed, which is beneficial to improving the accuracy of the sensing result and improving the efficiency and success rate of the sensing service.

Further, the operation 510 may also be implemented as the operation 610, as illustrated in FIG. 6. Alternatively, the sensing method may further include the operation 630.

FIG. 6 illustrates a schematic flowchart of a sensing method provided by an exemplary embodiment of the present disclosure. The method is performed by the first node, and the method at least includes the following operations.

In operation 610, the first sensing result is determined according to a difference between the first sensing information and the second sensing information.

In some embodiments, the first sensing result is determined according to remaining sensing information after removing the first sensing information from the second sensing information. The remaining sensing information after removing the first sensing information from the second sensing information may be understood as a difference between the first sensing information and the second sensing information.

In some embodiments, the first sensing result is determined according to a remaining result after removing the first processing result from the second processing result. The second processing result includes a result of performing the first processing on the second sensing information, and the first processing result includes a result of performing the first processing on the first sensing information. The first processing includes at least one of following: filtering, denoising, or noise reduction. That is to say, after performing one or more processes of filtering, denoising, or noise reduction on the second sensing information and the first sensing information, the first sensing result is determined according to the difference between the second sensing information and the first sensing information (that is, the remaining processing result after removing the first processing result from the second processing result), which helps to further improve the accuracy of the first sensing result because the negative influence of noise has been reduced or even eliminated.

In some embodiments, the first sensing result is determined according to a remaining part after removing the first part from the second part. The second part includes a part, of the second sensing information, exceeding the first threshold, and the first part includes a part, of the first sensing information, exceeding the first threshold. The remaining part of the second part after removing the first part may be understood as a difference between the first sensing information and the second sensing information. That is, when determining the first sensing result, it is not necessary to consider the parts, of the first sensing information and the second sensing information, below the first threshold. The reason is that the detection significance of the part below the first threshold is not great and is mostly noise interference in consideration of the influence of environment, noise, scattering, and the like that may be affected during signal transmission, and removing the part below the first threshold helps to further improve the accuracy of the first sensing result and reduce the complexity of acquiring the first sensing result.

In some embodiments, the first threshold value is determined by the first node, or configured by another node, or agreed by a communication protocol. Another node is a node in the system other than the first node. Alternatively, another node includes the second node, or does not include the second node.

In some embodiments, the first sensing information is an instantaneous measurement result corresponding to the first sensing resource, or the first sensing information is an average measurement result corresponding to the first sensing resource. The average measurement result means that the first signal is measured multiple times in the first sensing resource, and the first sensing information is obtained by averaging the multiple measurement results. The instantaneous measurement result may be understood as a single measurement result obtained after a single measurement of the first signal in the first sensing resource.

It should be noted that the first sensing information may be a median value, a minimum value, a maximum value, or the like of multiple measurement results corresponding to the first sensing resource. That is to say, the processing of multiple measurement results is not limited to taking an average value, and other mathematical processing methods are also applicable. For convenience of description, the embodiments of the present disclosure takes the average measurement result corresponding to the first sensing resource as the first sensing information as an example, and is not meant to be limited.

The first signal is measured multiple times in the first sensing resource, and the obtained multiple measurement results are mathematically processed, so that the result of the first sensing information is more accurate and the transmission situation of the first signal in the first sensing resource can be truthfully reflected, thereby improving the accuracy of the sensing result.

In some embodiments, the second sensing information is an instantaneous measurement result corresponding to the second sensing resource, or the second sensing information is an average measurement result corresponding to the second sensing resource. The average measurement result means that the first signal is measured multiple times in the second sensing resource, and the second sensing information is obtained after averaging the multiple measurement results. The instantaneous measurement result may also be understood as a single measurement result obtained after a single measurement of the first signal in the second sensing resource.

Similarly, the second sensing information may be a median value, a minimum value, a maximum value, or the like of multiple measurement results corresponding to the second sensing resource. That is to say, the processing of multiple measurement results is not limited to taking an average value, and other mathematical processing methods are also applicable. For convenience of explanation, the embodiments of the present disclosure takes the average measurement result corresponding to the second sensing information as the second sensing resource as an example, and is not meant to be limited.

The first signal is measured multiple times in the second sensing resource, and the obtained multiple measurement results are mathematically processed, so that the result of the second sensing information is more accurate and the transmission situation of the first signal in the second sensing resource can be truthfully reflected, thereby improving the accuracy of the sensing result.

In some embodiments, the first sensing resource is orthogonal to the second sensing resource.

In some embodiments, the first sensing resource and the second sensing resource are orthogonal in the time domain. That is, the first time domain resource is orthogonal to the second time domain resource. Alternatively, the first frequency domain resource is the same as or different from the second frequency domain resource, and the first spatial domain resource is the same as or different from the second spatial domain resource.

In some embodiments, the first time domain resource is orthogonal to the second time domain resource, and it may be understood that any time domain unit occupied by the first time domain resource does not belong to the second time domain resource, and it may also be understood that any time domain unit occupied by the second time domain resource does not belong to the first time domain resource.

In some embodiments, the time domain resource includes one or more time domain units. In the embodiments of the present disclosure, the time domain unit includes at least one of following: a Frame, a Subframe, a Slot, a Mini-Slot, a sub-slot, a Symbol, a Symbol group, or a time domain unit based on other time domain unit.

In some embodiments, the frequency domain resource includes one or more frequency domain units. In the embodiments of the present disclosure, the frequency domain unit includes at least one of following: a bandwidth, a carrier, a Physical Resource Block (PRB), a Resource Block Group (RBG), a Bandwidth Part (BWP), a subband, a subchannel, a subcarrier, or a unit based on other frequency domain unit.

In some embodiments, the spatial domain resource includes at least one of following: an antenna, an antenna port, a beam, a panel, a TRP, or a power amplifier.

For example, the first sensing resource and the second sensing resource are orthogonal in the time domain, and the first sensing resource and the second sensing resource are the same in the frequency domain and the spatial domain, such as occupying the same frequency domain resource, corresponding to the same antenna port, and the like.

In some embodiments, since there is no sensing target in the first sensing resource, the first sensing information corresponding to the first sensing resource does not include information of the sensing target, and the first sensing information includes clutter information in the environment. Exemplarily, the first sensing resource includes the first time domain resource, and no sensing target appears in the first time domain resource.

In some embodiments, there is no sensing target in the first sensing resource, and it may be understood that the first sensing resource includes a sensing resource for which the sensing target is not sensed.

In some embodiments, there may be a sensing target in the second sensing resource. If there is a sensing target in the second sensing resource, information such as a delay, a speed, a distance, and an orientation related to the sensing target may be acquired. If there is no sensing target in the second sensing resource, the second sensing information should be the same or similar to the first sensing information, and both the second sensing information and the first sensing information may reflect environmental information.

In some embodiments, the first time domain resource may also be referred to as the first measurement time window, which represents that the first signal is sampled and analyzed in the first measurement time window, and the obtained first sensing information reflects the transmission situation of the first signal in the first measurement time window. The second time domain resource may also be referred to as the second measurement time window, which represents that the first signal is sampled and analyzed in the second measurement time window, and the obtained second sensing information reflects the transmission situation of the first signal in the second measurement time window. Since there is no sensing target in the first measurement time window, the sensing target will not be sensed in the first measurement time window, the first sensing information does not carry the information of the sensing target. If there is the sensing target in the second measurement time window, the second sensing information includes the information of the sensing target, and the information of the sensing target can be acquired by analyzing the difference between the second sensing information and the first sensing information, that is, the first sensing result can be acquired, and the sensing for the target can be realized.

In some embodiments, the first sensing resource is agreed by the communication protocol, or determined by the first node, or configured by another node. Exemplarily, the first node receives configuration information of the first sensing resource.

In some embodiments, the first sensing resource is artificially set to ensure that there is no sensing target in the first sensing resource, that is, to ensure that no sensing target is sensed in the first sensing resource.

In some embodiments, the first sensing resource is a periodic sensing resource, or a semi-statically configured sensing resource, or an aperiodic sensing resource.

In some embodiments, the first sensing resource is a periodic sensing resource, and the first node or another node periodically measure the first signal in the first sensing resource to obtain periodic first sensing information, thereby periodically acquiring and updating environmental information, so as to improve the accuracy of clutter information and avoid the problem of the inaccurate sensing result caused by environmental changes when determining the first sensing result.

In some embodiments, the second sensing resource is agreed by the communication protocol, or determined by the first node, or configured by another node. Exemplarily, the first node receives configuration information of the second sensing resource.

In some embodiments, the second sensing resource is a periodic sensing resource, or a semi-statically configured sensing resource, or an aperiodic sensing resource.

In some embodiments, the first sensing information is obtained by measuring by the first node, that is, the first node measures the first signal in the first sensing resource and acquires the first sensing information. Alternatively, the first sensing information is measured by another node and notified to the first node by another node.

In some embodiments, the second sensing information is obtained by measuring by the first node, that is, the first node measures the first signal in the second sensing resource and acquires the second sensing information. Alternatively, the second sensing information is measured by another node and notified to the first node by another node.

In some embodiments, the first sensing information includes at least one of following: the first frequency domain channel information, the first time domain channel information, or the first delay-Doppler domain information.

In some embodiments, the second sensing information includes at least one of following: the second frequency domain channel information, the second time domain channel information, or the second delay-Doppler domain information.

In some embodiments, the frequency domain channel information may be understood as channel information reflected by N subcarrier point(s), or may be understood as channel information on N subcarrier point(s). Here, N subcarrier point(s) may also be understood as N frequency domain sampling point(s). In the present disclosure, the first signal is an Orthogonal Frequency-Division Multiplexing (OFDM) signal as an example, and the frequency domain channel information (S_{g})ₙ may be expressed by the following formula (1): ${\left({S}_{g}\right)}_{n} = \frac{Rx \left(n\right)}{Tx \left(n\right)} = H \left(n\right) \left(\overline{{k}_{r}}⊗\overline{{k}_{d}}\right)$ (1)

Here, n represents the n-th subcarrier point among the N subcarrier point(s), 0≤ n ≤ N, N is an integer, and N is an integer greater than 0. Rx represents the received first signal, and Tx represents the sent first signal. H(n) represents the channel response corresponding to the n-th subcarrier point. k̅ᵣ represents the first phase offset and k̅_{d} represents the second phase offset.

In some embodiments, the first frequency domain channel information is determined according to at least one of following: channel response(s) corresponding to N subcarrier point(s) in the first sensing resource, the first phase offset(s) corresponding to N subcarrier point(s) in the first sensing resource, or the second phase offset(s) corresponding to N subcarrier point(s) in the first sensing resource.

In some embodiments, the second frequency domain channel information is determined according to at least one of following: channel response(s) corresponding to N subcarrier point(s) in the second sensing resource, the first phase offset(s) corresponding to N subcarrier point(s) in the second sensing resource, or the second phase offset(s) corresponding to N subcarrier point(s) in the second sensing resource.

In some embodiments, the first phase offset(s) is/are determined according to delay(s) of the first signal, or the first phase offset(s) is/are determined according to the delay(s) of the first signal and frequency (frequencies) of the N subcarrier point(s). Further, the first phase shift ^{k̅}ᵣmay be represented by the following formula (2). $\overline{{k}_{r}} = exp \left(-j2{πf}_{n}\frac{2 r}{c}\right)$ (2)

Here, $\frac{2 r}{c}$ represents the round-trip delay of the first signal. 2r represents the transmission distance of the first signal, that is, the distance between the receiving node of the first signal and the sending node of the first signal. Therefore, it may be understood that the delay of the first signal is determined according to the transmission distance of the first signal. c represents the propagation speed of the first signal. fₙ represents the frequency corresponding to the n-th subcarrier point.

In some embodiments, the second phase offset is determined according to a Doppler frequency shift of the first signal, or the second phase offset is determined according to a Doppler frequency shift of the first signal and the first time domain length. Further, the second phase shift may be represented by the following formula (3). $\overline{{k}_{d}} = exp \left(j2πT\frac{2 {vf}_{c}}{c}\right)$ (3)

Here, $\frac{{vf}_{c}}{c}$ represents the Doppler frequency shift of the first signal, v represents the moving speed of the sensing target, f_{c} represents frequency of the first signal, and c represents the propagation speed of the first signal. Therefore, it may be understood that the Doppler frequency shift of the first signal is determined according to the moving speed of the sensing target.T is the first time domain length, which represents a time domain length between the time when the first signal is measured and the time when the first signal is sent, and which is related to the length T_{S} of one time domain unit.

For example, the first signal is sent at the first time domain unit. If the first signal is measured at the fifth time domain unit to obtain the first sensing information, the first time domain length corresponding to the first sensing information T = 5 × T_{S}. If the first signal is measured at the eighth time domain unit to obtain the second sensing information, the first time domain unit length corresponding to the second sensing information is T = 8 × T_{S}.

In some embodiments, the time domain channel information may be understood as channel information reflected by K delay points. K delay points may also be understood as K time domain sampling points. Time domain channel information h_{g} may be obtained from frequency domain channel information S_{g} through Fast Fourier Transform (FFT) or Discrete Fourier Transform (DFT) transformation. It may also be understood that the first time domain channel information is determined according to a result of performing FFT or DFT on the first frequency domain channel information, and the second time domain channel information is determined according to a result of performing FFT or DFT on the second frequency domain channel information.

In some embodiments, the delay-Doppler domain information may be understood as channel information reflected by N subcarrier(s) corresponding to M time domain units. Here, N subcarrier point(s) may also be understood as N frequency domain sampling point(s). For example, first signal(s) on N subcarrier(s) corresponding to M symbol(s) is/are measured to obtain frequency domain channel information, and delay-Doppler domain information is obtained by two-dimensional FFT (2D-FFT) transformation. The delay-Doppler domain channel information (S_{g})_{m,n} may be represented by the following formula (4): ${\left({S}_{g}\right)}_{m , n} = \frac{Rx \left(mN+n\right)}{Tx \left(mN+n\right)} = H \left(m, n\right) \left(\overline{{k}_{r}}⊗\overline{{k}_{d}}\right)$ (4)

Here, n represents the n-th subcarrier point among the N subcarrier point(s), 0≤ n ≤ N, and n is an integer. m represents the m-th time domain unit among the M time domain unit(s), 0≤ m ≤ M, m is an integer, and M is an integer greater than 0.

Rx represents the received first signal, and Tx represents the sent first signal. H(m, n) represents the channel response of the n-th subcarrier point corresponding to the m-th time domain unit. k̅ᵣ̅ represents the first phase shift, and the reference is made to the formula (2). k̅_̅{̅d̅}̅ represents the second phase shift, and the reference is made to the formula (3).

In some embodiments, the first delay-Doppler domain information is determined according to at least one of following: channel response(s) corresponding to the N subcarrier point(s) and the M delay point(s) in the first sensing resource, the first phase offset(s) corresponding to the N subcarrier point(s) and the M delay point(s) in the first sensing resource, or the second phase offset(s) corresponding to the N subcarrier point(s) and the M delay point(s) in the first sensing resource.

In some embodiments, the second delay-Doppler domain information is determined according to at least one of following: channel response(s) corresponding to the N subcarrier point(s) and the M delay point(s) in the second sensing resource, the first phase offset(s) corresponding to the N subcarrier point(s) and the M delay point(s) in the second sensing resource, or the second phase offset(s) corresponding to the N subcarrier point(s) and the M delay point(s) in the second sensing resource.

By performing a DFT Transform on each row of S_{g} and performing an Inverse Discrete Fourier Transform (IDFT) on each column of S_{g}, at least one of the following may be derived: a Doppler frequency shift of the sensing target, a moving speed of the sensing target, a delay between the sensing node and the sensing target, or a distance between the sensing node and the sensing target.

For the rest of the contents involved in the operation 610, reference may be made to the operation 510, which will not be described again here.

In operation 630, the first sensing result is reported.

In some embodiments, the first node reports the first sensing result to the sensing control node, and the sensing control node may be UE, an access network device, or a core network element (such as SF, LMF).

In some embodiments, the first node includes UE, and the first node may report the first sensing result to the access network device and/or the core network element.

In some embodiments, the first node includes an access network device, and the first node may report the first sensing result to the core network element.

In some embodiments, the first node includes a core network element, and the first node may feed back the first sensing result to the Sensing Client node. The Sensing Client node may be understood as a node that triggers a sensing service, a node that sends a sensing request, or a node that expects to acquire a sensing result, for example, the Sensing Client node is an AF of a core network, an access network device, a UE, or the like.

In summary, in the method provided by the embodiments of the present disclosure, acquiring the first sensing result according to a difference between the first sensing information and the second sensing information is supported. Since the influence of the same part between the first sensing information and the second sensing information is removed when the first sensing result is determined, the influence of the clutter information in the environment is removed, which is beneficial to improving the accuracy of the sensing result. Furthermore, since the first sensing result is obtained by analyzing and processing the first sensing information and the second sensing information, compared with reporting the first sensing information and the second sensing information, reporting the first sensing result is beneficial to reducing reporting overhead, avoiding wasting transmission resources caused by redundant information, saving power consumption of the receiver of the first sensing result, and improving execution efficiency of the sensing service.

FIG. 7 illustrates a schematic flowchart of a sensing method provided by an exemplary embodiment of the present disclosure. The method is performed by the second node, and the method at least includes the following operation.

In operation 710, the first sensing result is received, and the first sensing result is determined according to a difference between the first sensing information and the second sensing information.

In some embodiments, the second node is a sensing control node, or a Sensing Client node.

In some embodiments, the second node may be a terminal device as illustrated in FIG. 1 to FIG. 4, an access network device (such as a base station) as illustrated in FIG. 1 to FIG. 4, or a core network element (such as SF or LMF) as illustrated in FIG. 3 and FIG. 4.

For the relevant content of the operation 710, the reference is made to the operation 510, operation 610, and operation 630, which will not be described again here.

In summary, in the method provided by the embodiment of the present disclosure, since the received first sensing result is determined according to the difference between the first sensing information and the second sensing information, the influence of the same part between the first sensing information and the second sensing information is removed, and the influence of the clutter information in the environment is removed, so that the first sensing result has high accuracy and contributes to the overall efficiency and success rate of the sensing service. In addition, receiving the first sensing result, compared with receiving the first sensing information and the second sensing information, helps to reduce reporting overhead, avoids wasting transmission resources caused by redundant information, saves power consumption, and improves the execution efficiency of the sensing service.

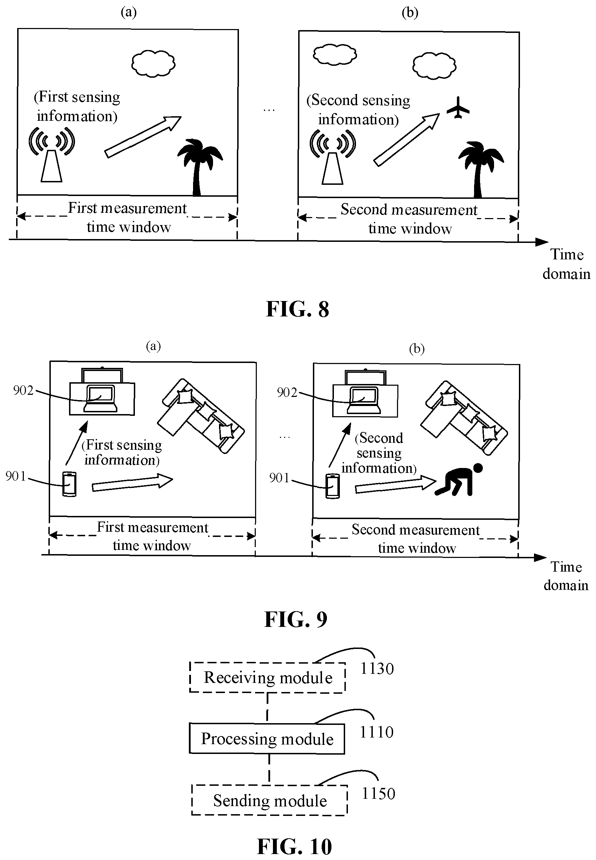

FIG. 8 illustrates a schematic diagram of a sensing method provided by an exemplary embodiment of the present disclosure. The embodiments of the present disclosure will be described by taking the first sensing information and the second sensing information measured by the first node as an example.

The first node performs sensing in the first measurement time window, that is, measures the first signal in the first measurement time window, so as to obtain the first sensing information. As can be seen from the foregoing, there is no sensing target in the first measurement time window. For example, if the sensing target is an UAV, there is no UAV in the first measurement time window, if the sensing target is a pedestrian, there is no pedestrian in the first measurement time window, if the sensing target is rainwater, there is no rainwater in the first measurement time window, and the like. FIG. 8 illustrates a UAV detection scenario, FIG. 8 (a) corresponds to the first measurement time window, and FIG. 8 (b) corresponds to the second measurement time window, and illustrates a scenario in which a sensing target appears in the second measurement time window.

Taking the first sensing information and the second sensing information including frequency domain channel information as an example.

The first node processes the measurement results in the first measurement time window. For example, the frequency domain channel information obtained by multiple measurements in the first measurement time window is merged to obtain the first sensing information, and it is assumed that the first sensing information corresponds to three peak points: S(x1), S(x2) and S(x3).

The first node performs sensing in the second measurement time window, that is, measures the first signal in the second measurement time window, so as to obtain the second sensing information. The first node processes the measurement results in the second measurement time window. For example, the frequency domain channel information obtained by multiple measurements in the second measurement time window is merged to obtain the second sensing information.

It is assumed that the second sensing information corresponds to 4 peak points: S(x1), S(x2), S(x3), and S(x4). The first sensing information is removed from the second sensing information to obtain a remaining peak point S(x4). It is indicated that a sensing target having a speed of x4, a sensing target having a Doppler frequency shift of x4, or a sensing target having a micro-Doppler frequency shift of x4 appears in the environment.

It is assumed that the second sensing information corresponds to three peak points: S(x1), S(x2) and S(x3). It is indicated that the second sensing information is the same as the first sensing information, and no sensing target appears in the environment.

Taking the first sensing information and the second sensing information including time domain channel information as an example:
The first node processes the measurement results in the first measurement time window. For example, the time domain channel information obtained by multiple measurements in the first measurement time window is merged to obtain the first sensing information. It is assumed that the first sensing information corresponds to four peak points: h₀(0.1µs), h₁(0.5µs), h₂(0.8µs) and h₃(1µs). h(t) represents channel information when the delay is t.

The first node performs sensing in the second measurement time window, that is, measures the first signal in the second measurement time window, so as to obtain the second sensing information. The first node processes the measurement results in the second measurement time window. For example, the time domain channel information obtained by multiple measurements in the second measurement time window is merged to obtain the second sensing information.

It is assumed that the second sensing information corresponds to five peak points: h₀(0.1µs), h₁(0.5µs), h₂(0.8µs), h₃(0.9µs), and h₄(1µs). The first sensing information is removed from the second sensing information to obtain the remaining peak pointh₃(0.9µs). It is indicated that there is a sensing target with a delay of 0.9µs. Combining the propagation speed of electromagnetic waves c = 3×10⁸ m/s, the distance between the sensing target and the first node may be calculated as: 0.9×10⁻⁶×3×10⁸÷2=135m.

It is assumed that the second sensing information corresponds to four peak points: h₀(0.1µs), h₁(0.5µs), h₂(0.8µs) and h₃(1µs). It is indicated that the second sensing information is the same as the first sensing information, and no sensing target appears in the environment.

FIG. 9 illustrates a schematic diagram of a sensing method provided by an exemplary embodiment of the present disclosure. The embodiment of the present disclosure will be described by taking the first sensing information and the second sensing information measured by another node as an example. It is assumed that the first sensing information and the second sensing information include delay-Doppler domain information.

Another node 901 performs sensing in the first measurement time window, that is, measures the first signal in the first measurement time window, so as to obtain the first sensing information. As can be seen from the foregoing, there is no sensing target in the first measurement time window. FIG. 9 illustrates an indoor detection scenario. FIG. 9 (a) corresponds to the first measurement time window, and FIG. 9 (b) corresponds to the second measurement time window, and illustrates a scenario in which a sensing target appears in the second measurement time window.

Another node 901 processes the measurement results in the first measurement time window. For example, the time domain channel information obtained by multiple measurements in the first measurement time window is merged to obtain the first sensing information, and the first sensing information is notified to the first node 902. It is assumed that the first sensing information corresponds to 4 peak points: (v₀=0,d=100m), (v₀=0,d=150m), (v₀=0,d=200m), (v₀=0.01m/s,d=100m).

Another node 901 performs sensing in the second measurement time window, that is, measures the first signal in the second measurement time window, so as to obtain the second sensing information. The first node processes the measurement results in the second measurement time window. For example, delay-Doppler domain information obtained by multiple measurements in the second measurement time window is merged to obtain the second sensing information, and the second sensing information is informed to the first node 902.

It is assumed that the second sensing information corresponds to five peak points: (v₀=0,d=100m), (v₀=0,d=150m), (v₀=0,d=200m), (v₀=0.01m/s,d=100m), and (v₀=60m/s,d=50m). The first node removes the first sensing information from the second sensing information to obtain the remaining peak point (v₀=60m/s,d=50m). It is indicated that there is a sensing target in the environment, which is at a distance of 50 meters from another node and has a movement speed of 60m/s.

It is assumed that the second sensing information corresponds to four peak points: (v₀=0,d=100m), (v₀=0,d=150m), (v₀=0,d=200m) and (v₀=0.01m/s,d=100m). It is indicated that the second sensing information is the same as the first sensing information, and no sensing target appears in the environment.

FIG. 10 illustrates a structural block diagram of a sensing apparatus provided by an exemplary embodiment of the present disclosure, which may be implemented as the first node or a part of the first node, and the first node may be implemented as one or more of a UE, an access network device, and a core network element illustrated in FIG. 1 and FIG. 2. The apparatus includes a processing module 1110. Alternatively, the apparatus further includes at least some of a receiving module 1130 and a sending module 1150.

The processing module 1110 is configured to determine the first sensing result according to a difference between the first sensing information and the second sensing information. The first sensing information corresponds to the first sensing resource, the second sensing information corresponds to the second sensing resource, and the first sensing resource is different from the second sensing resource.

In some embodiments, the processing module 1110 is configured to acquire the first sensing information and/or the second sensing information.

In some embodiments, the apparatus further includes a receiving module 1130. The receiving module is configured to receive the first sensing information and/or the second sensing information.

In some embodiments, the processing module 1110 is configured to determine the first sensing result according to remaining sensing information after removing the first sensing information from the second sensing information.

In some embodiments, the processing module 1110 is configured to determine the first sensing result according to a remaining processing result after removing the first processing result from the second processing result. The second processing result includes a result of performing the first processing on the second sensing information, the first processing result includes a result of performing the first processing on the first sensing information, and the first processing includes at least one of following: filtering, denoising, or noise reduction.

In some embodiments, the processing module 1110 is configured to determine the first sensing result according to a remaining part after removing the first part from the second part. The second part includes a part, of the second sensing information, exceeding a first threshold, and the first part comprises a part, of the first sensing information, exceeding the first threshold.

In some embodiments, the first sensing information is an instantaneous measurement result or an average measurement result corresponding to the first sensing resource. The second sensing information is an instantaneous measurement result or an average measurement result corresponding to the second sensing resource.

In some embodiments, the first sensing resource is orthogonal to the second sensing resource.

In some embodiments, the first sensing resource is orthogonal to the second sensing resource in a time domain.

In some embodiments, no sensing target exists in the first sensing resource, and the first sensing result is a sensing result corresponding to the sensing target.

In some embodiments, the first sensing information includes at least one of following information: the first frequency domain channel information, the first time domain channel information, or the first delay-Doppler domain information; and/or the second sensing information includes at least one of following information: the second frequency domain channel information, the second time domain channel information, or the second delay-Doppler domain information.

In some embodiments, the first frequency domain channel information is determined according to at least one of following: channel response(s) corresponding to N subcarrier point(s) in the first sensing resource, the first phase offset(s) corresponding to the N subcarrier point(s) in the first sensing resource, or the second phase offset(s) corresponding to the N subcarrier point(s) in the first sensing resource. The second frequency domain channel information is determined according to at least one of following: channel response(s) corresponding to the N subcarrier point(s) in the second sensing resource, the first phase offset(s) corresponding to the N subcarrier point(s) in the second sensing resource, or the second phase offset(s) corresponding to the N subcarrier point(s) in the second sensing resource. The first phase offset(s) is/are determined according to delay(s) of the first signal, the second phase offset(s) is/are determined according to a Doppler frequency shift of the first signal, the first signal is used to determine the first sensing result, and N is an integer greater than 0.

In some embodiments, the first delay-Doppler domain information is determined according to at least one of following: channel response(s) corresponding to N subcarrier point(s) and M delay point(s) in the first sensing resource, the first phase offset(s) corresponding to the N subcarrier point(s) and the M delay point(s) in the first sensing resource, or the second phase offset(s) corresponding to the N subcarrier point(s) and the M delay point(s) in the first sensing resource. The second delay-Doppler domain information is determined according to at least one of following: channel response(s) corresponding to the N subcarrier point(s) and the M delay point(s) in the second sensing resource, the first phase offset(s) corresponding to the N subcarrier point(s) and the M delay point(s) in the second sensing resource, or the second phase offset(s) corresponding to the N subcarrier point(s) and the M delay point(s) in the second sensing resource. The first phase offset(s) is/are determined according to delay(s) of the first signal, the second phase offset(s) is/are determined according to Doppler frequency shift(s) of the first signal, the first signal is used to determine the first sensing result, N is an integer greater than 0, and M is an integer greater than 0.

In some embodiments, the delay(s) of the first signal is/are determined according to transmission distance(s) of the first signal, and the first phase offset(s) is/are determined according to the delay(s) of the first signal and frequency (frequencies) of the N subcarrier point(s).

In some embodiments, the Doppler frequency shift(s) of the first signal is/are determined according to a moving speed of a sensing target, and the second phase shift(s) is/are determined according to the Doppler frequency shift(s) of the first signal and the first time domain length.

In some embodiments, the first time domain channel information is determined according to a result of performing a Fast Fourier transform (FFT) or a Discrete Fourier Transform (DFT) on the first frequency domain channel information, and the second time domain channel information is determined according to a result of performing the FFT or the DFT on the second frequency domain channel information.

In some embodiments, in a case that the first sensing information includes the first time domain channel information and the second sensing information includes the second time domain channel information, the first sensing result includes the first delay. The first delay is used to determine a distance between a sensing target and the device.

In some embodiments, in a case that the first sensing information includes the first delay-Doppler domain information and the second sensing information includes the second delay-Doppler domain information, the first sensing result includes the first distance(s) and/or the first speed(s). The first distance refers to a distance between the sensing target and the apparatus, and the first speed refers to a moving speed of the sensing target.

In some embodiments, the first sensing information is measured by the apparatus, or the first sensing information is measured by another node. The second sensing information is measured by the apparatus, or the second sensing information is measured by the another node. The another node includes a node other than the apparatus.

In some embodiments, the apparatus further includes a sending module 1150. The sending module 1150 is configured to report the first sensing result.

In some embodiments, the processing module 1110 is configured to perform at least one of the operation 510 or the operation 610.

In some embodiments, the sending module 1150 is configured to perform the operation 630.

In summary, in the apparatus provided by the embodiments of the present disclosure, acquiring the first sensing result according to a difference between the first sensing information and the second sensing information is supported. Since the influence of the same part between the first sensing information and the second sensing information is removed when the first sensing result is determined, the influence of the clutter information in the environment is removed, which is beneficial to improving the accuracy of the sensing result. Furthermore, since the first sensing result is obtained by analyzing and processing the first sensing information and the second sensing information, compared with reporting the first sensing information and the second sensing information, reporting the first sensing result is beneficial to reducing reporting overhead, avoiding wasting transmission resources caused by redundant information, saving power consumption of the receiver of the first sensing result, and improving execution efficiency of the sensing service.

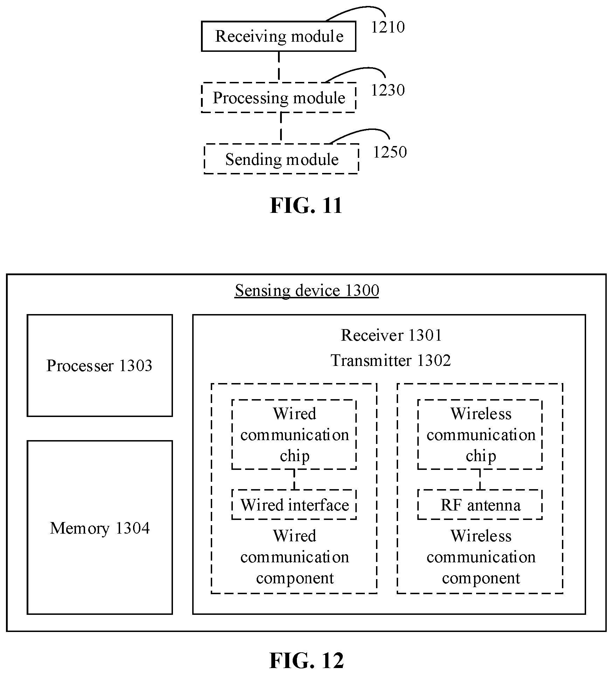

FIG. 11 illustrates a structural block diagram of a sensing apparatus according to an exemplary embodiment of the present disclosure, which may be implemented as the second node or a part of the second node, and the second node may be implemented as one or more of the UE, the access network device, and the core network element illustrated in FIG. 1 and FIG. 2. The apparatus includes a receiving module 1210. Alternatively, the apparatus further includes at least some of the processing module 1230 and the sending module 1250.

The receiving module 1210 is configured to receive the first sensing result. The first sensing result is determined according to a difference between the first sensing information and the second sensing information. The first sensing information corresponds to the first sensing resource, the second sensing information corresponds to the second sensing resource, and the first sensing resource is different from the second sensing resource.

In some embodiments, the first sensing result is determined according to remaining sensing information after removing the first sensing information from the second sensing information.

In some embodiments, the first sensing result is determined according to a remaining processing result after removing the first processing result from the second processing result. The second processing result includes a result of performing the first processing on the second sensing information, the first processing result includes a result of performing the first processing on the first sensing information, and the first processing includes at least one of following: filtering, denoising, or noise reduction.

In some embodiments, the first sensing result is determined according to a remaining part after removing the first part from the second part. The second part includes a part, of the second sensing information, exceeding the first threshold, and the first part includes a part, of the first sensing information, exceeding the first threshold.

In some embodiments, the first sensing information is an instantaneous measurement result or an average measurement result corresponding to the first sensing resource. The second sensing information is an instantaneous measurement result or an average measurement result corresponding to the second sensing resource.

In some embodiments, the first sensing resource is orthogonal to the second sensing resource.

In some embodiments, the first sensing resource is orthogonal to the second sensing resource in a time domain.

In some embodiments, no sensing target exists in the first sensing resource, and the first sensing result is a sensing result corresponding to the sensing target.

In some embodiments, the first sensing information includes at least one of following information: the first frequency domain channel information, the first time domain channel information, or the first delay-Doppler domain information, and/or the second sensing information includes at least one of following information: the second frequency domain channel information, the second time domain channel information, or the second delay-Doppler domain information.

In some embodiments, the first frequency domain channel information is determined according to at least one of following: channel response(s) corresponding to N subcarrier point(s) in the first sensing resource, first phase offset(s) corresponding to the N subcarrier point(s) in the first sensing resource, or the second phase offset(s) corresponding to the N subcarrier point(s) in the first sensing resource. The second frequency domain channel information is determined according to at least one of following: channel response(s) corresponding to the N subcarrier point(s) in the second sensing resource, first phase offset(s) corresponding to the N subcarrier point(s) in the second sensing resource, or the second phase offset(s) corresponding to the N subcarrier point(s) in the second sensing resource. The first phase offset(s) is/are determined according to delay(s) of a first signal, the second phase offset(s) is/are determined according to Doppler frequency shift(s) of the first signal, the first signal is used to determine the first sensing result, and N is an integer greater than 0.

In some embodiments, the first delay-Doppler domain information is determined according to at least one of following: channel response(s) corresponding to N subcarrier point(s) and M delay point(s) in the first sensing resource, the first phase offset(s) corresponding to the N subcarrier point(s) and the M delay point(s) in the first sensing resource, or the second phase offset(s) corresponding to the N subcarrier point(s) and the M delay point(s) in the first sensing resource; the second delay-Doppler domain information is determined according to at least one of following: channel response(s) corresponding to the N subcarrier point(s) and the M delay point(s) in the second sensing resource, the first phase offset(s) corresponding to the N subcarrier point(s) and the M delay point(s) in the second sensing resource, or the second phase offset(s) corresponding to the N subcarrier point(s) and the M delay point(s) in the second sensing resource. The first phase offset(s) is/are determined according to delay(s) of the first signal, the second phase offset(s) is/are determined according to Doppler frequency shift(s) of the first signal, the first signal is used to determine the first sensing result, N is an integer greater than 0, and M is an integer greater than 0.

In some embodiments, the delay(s) of the first signal is/are determined according to transmission distance(s) of the first signal, and the first phase offset(s) is/are determined according to the delay(s) of the first signal and frequency(frequencies) of the N subcarrier point(s).

In some embodiments, the Doppler frequency shift(s) of the first signal is/are determined according to a moving speed of a sensing target, and the second phase shift(s) is/are determined according to the Doppler frequency shift(s) of the first signal and a first time domain length.

In some embodiments, the first time domain channel information is determined according to a result of performing a Fast Fourier transform (FFT) or a Discrete Fourier Transform (DFT) on the first frequency domain channel information, and the second time domain channel information is determined according to a result of performing the FFT or the DFT on the second frequency domain channel information.

In some embodiments, in a case that the first sensing information includes the first time domain channel information and the second sensing information includes the second time domain channel information, the first sensing result includes the first delay. The first delay is used to determine a distance between a sensing target and the apparatus.

In some embodiments, in a case that the first sensing information includes the first delay-Doppler domain information and the second sensing information includes the second delay-Doppler domain information, the first sensing result includes the first distance and/or the first speed. The first distance represents a distance between a sensing target and the apparatus, and the first speed represents a moving speed of the sensing target.

In some embodiments, the first sensing information is measured by the apparatus, or the first sensing information is measured by another node, and the second sensing information is measured by the apparatus, or the second sensing information is measured by the another node. The another node includes a node other than the apparatus.

In some embodiments, the apparatus further includes a processing module 1230. The processing module 1230 is configured to perform a sensing service according to the first sensing result.

In some embodiments, the sending module 1250 is configured to send the first sensing information and/or the second sensing information to the first node.

In summary, in the apparatus provided in the embodiments of the present disclosure, the acquired first sensing result is determined according to the difference between the first sensing information and the second sensing information. Since the influence of the same part between the first sensing information and the second sensing information is removed when the first sensing result is determined, the influence of the clutter information in the environment is removed, which is beneficial to improving the accuracy of the sensing result. Furthermore, since the first sensing result is obtained by analyzing and processing the first sensing information and the second sensing information, compared with reporting the first sensing information and the second sensing information, reporting the first sensing result is beneficial to reducing reporting overhead, avoiding wasting transmission resources caused by redundant information, saving power consumption of the receiver of the first sensing result, and improving execution efficiency of the sensing service.

It should be noted that when the apparatus provided in the above-described embodiment realizes its function, only the division of the above-described functional modules is used as an example, and in practical application, the above-described functions may be allocated to be completed by different functional modules according to needs, that is, the internal structure of the terminal device may be divided into different functional modules to complete all or part of the above-described functions. In addition, the apparatus provided in the above-described embodiment belongs to the same concept as the method embodiment.

FIG. 12 illustrates a schematic structure diagram of a sensing device 1300 provided by an exemplary embodiment of the present disclosure. The sensing device includes at least one of following: a receiver 1301, a transmitter 1302, a processor 1303, a memory 1304, and a bus (not shown). The sensing device 1300 may be used to perform some or all of the operations performed by the first node described above.

The receiver 1301 is configured to implement a reception function, and the transmitter 1302 is configured to implement a transmission function.

In some embodiments, the receiver 1301 and the transmitter 1302 may be implemented as a communication component, which may be a communication chip, which may be referred to as a transceiver. In some embodiments, the receiver 1301 may be configured to implement the functions and operations of the receiving module 1130 and/or the receiving module 1210 described above, and the transmitter 1302 may be configured to implement the functions and operations of the sending module 1150 and/or the sending module 1250 described above.

In some embodiments, the receiver 1301 and the transmitter 1302 may be implemented as a wireless communication component and/or a wired communication component.

The processor 1303 includes one or more processing cores, and executes various functional applications and information processing by running software programs and modules. In some embodiments, the processor 1303 may be used to implement the functions and operations of the processing module 1110 and/or the processing module 1230 described above.

The memory 1304 may be configured to store a computer program executed by the processor 1303 for executing the computer program to implement various operations in the method embodiments described above.

In some embodiments, the memory 1304 may be connected to processor 1303, receiver 1301 and transmitter 1302.

Further, the memory 1304 may be implemented by any type of volatile or non-volatile storage device, or the combination of the volatile and non-volatile storage device. The volatile and non-volatile storage device includes, but is not limited to, magnetic or optical disks, Electrically-Erasable Programmable Read Only Memory (EEPROM), Erasable Programmable Read Only Memory (EPROM), Static Random Access Memory (SRAM), Read-Only Memory (ROM), Magnetic Memory, Flash Memory, Programmable Read-Only Memory (PROM).

In some embodiments, the receiver 1301 independently receives the signal/data, or the processor 1303 controls the receiver 1301 to receive the signal/data, or the processor 1303 requests the receiver 1301 to receive the signal/data, or the processor 1303 cooperates with the receiver 1301 to receive the signal/data.

In some embodiments, the transmitter 1302 independently sends the signals/data, or the processor 1303 controls the transmitter 1302 to send signals/data, or the processor 1303 requests the transmitter 1302 to send signals/data, or the processor 1303 cooperates with the transmitter 1302 to send signals/data.

For details not described in detail in this embodiment, the reference is made to the above embodiment, which will not be described in detail here.

In an exemplary embodiment of the present disclosure, there is also provided a chip. The chip includes a programmable logic circuit and/or program instructions for implementing a sensing method provided by each of the above-described method embodiments when the chip is run on a communication device.

In some embodiments, the chip includes a processing module 1110. Alternatively, the device further includes at least some of the receiving module 1130 and/or the sending module 1150. The related contents of the processing module 1110, the receiving module 1130, and the sending module 1150 may be described above, which will not be described again here.

In some embodiments, the chip includes a receiving module 1210. Alternatively, the device further includes a processing module 1230 and/or a sending module 1250. The related contents of the receiving module 1210, the processing module 1230, and the sending module 1250 may be described above, which will not be described again here.

In an exemplary embodiment of the present disclosure, there is also provided a computer-readable storage medium in which a computer program is stored, and when executed by a processor, the computer program implements the above-described sensing method.

In an exemplary embodiment of the present disclosure, there is also provided a computer program product for implementing the above-described sensing method when executed by a processor.

In an exemplary embodiment of the present disclosure, there is also provided a computer program. The computer program includes computer instructions, and a processor of a computer device executes the computer instructions, causing the computer device to execute the sensing method described above.

Those of ordinary skill in the art can understand that all or part of the operations of implementing the above-described embodiments may be completed by hardware, or related hardware that is instructed by a program, and the program may be stored in a computer-readable storage medium, and the above-mentioned storage medium may be a read-only memory, a magnetic disk, an optical disk, or the like.

The above are only optional embodiments of the present disclosure, and are not intended to limit the present disclosure. Any modification, equivalent substitution, improvement, etc. made within the spirit and principles of the present disclosure shall be included in the scope of protection of the present disclosure.

## Claims

1. A sensing method, performed by a first node, and comprising:
determining a first sensing result according to a difference between first sensing information and second sensing information,
wherein the first sensing information corresponds to a first sensing resource, the second sensing information corresponds to a second sensing resource, and the first sensing resource is different from the second sensing resource.

2. The method of claim 1, wherein the first sensing result is determined according to remaining sensing information after removing the first sensing information from the second sensing information.

3. The method of claim 2, wherein the first sensing result is determined according to a remaining processing result after removing a first processing result from a second processing result,
wherein the second processing result comprises a result of performing a first processing on the second sensing information, the first processing result comprises a result of performing the first processing on the first sensing information, and the first processing comprises at least one of following: filtering, denoising, or noise reduction.

4. The method of claim 2, wherein the first sensing result is determined according to a remaining part after removing a first part from a second part,
wherein the second part comprises a part, of the second sensing information, exceeding a first threshold, and the first part comprises a part, of the first sensing information, exceeding the first threshold.

5. The method of any one of claims 1 to 4, wherein the first sensing information is an instantaneous measurement result or an average measurement result corresponding to the first sensing resource, and the second sensing information is an instantaneous measurement result or an average measurement result corresponding to the second sensing resource.

6. The method of any one of claims 1 to 5, wherein the first sensing resource is orthogonal to the second sensing resource.

7. The method of claim 6, wherein the first sensing resource is orthogonal to the second sensing resource in a time domain.

8. The method of any one of claims 1 to 7, wherein no sensing target exists in the first sensing resource, and the first sensing result is a sensing result corresponding to the sensing target.

9. The method of any one of claims 1 to 8, wherein
the first sensing information comprises at least one of following information: first frequency domain channel information, first time domain channel information, or first delay-Doppler domain information; and/or
the second sensing information comprises at least one of following information: second frequency domain channel information, second time domain channel information, or second delay-Doppler domain information.

10. The method of claim 9, wherein
the first frequency domain channel information is determined according to at least one of following: channel response(s) corresponding to N subcarrier point(s) in the first sensing resource, first phase offset(s) corresponding to the N subcarrier point(s) in the first sensing resource, or second phase offset(s) corresponding to the N subcarrier point(s) in the first sensing resource;
the second frequency domain channel information is determined according to at least one of following: channel response(s) corresponding to the N subcarrier point(s) in the second sensing resource, first phase offset(s) corresponding to the N subcarrier point(s) in the second sensing resource, or second phase offset(s) corresponding to the N subcarrier point(s) in the second sensing resource; and
the first phase offset(s) is/are determined according to delay(s) of a first signal, the second phase offset(s) is/are determined according to Doppler frequency shift(s) of the first signal, the first signal is used to determine the first sensing result, and N is an integer greater than 0.

11. The method of claim 9 or 10, wherein
the first delay-Doppler domain information is determined according to at least one of following: channel response(s) corresponding to N subcarrier point(s) and M delay point(s) in the first sensing resource, first phase offset(s) corresponding to the N subcarrier point(s) and the M delay point(s) in the first sensing resource, or second phase offset(s) corresponding to the N subcarrier point(s) and the M delay point(s) in the first sensing resource;
the second delay-Doppler domain information is determined according to at least one of following: channel response(s) corresponding to the N subcarrier point(s) and the M delay point(s) in the second sensing resource, first phase offset(s) corresponding to the N subcarrier point(s) and the M delay point(s) in the second sensing resource, or second phase offset(s) corresponding to the N subcarrier point(s) and the M delay point(s) in the second sensing resource; and
the first phase offset(s) is/are determined according to delay(s) of the first signal, the second phase offset(s) is/are determined according to Doppler frequency shift(s) of the first signal, the first signal is used to determine the first sensing result, N is an integer greater than 0, and M is an integer greater than 0.

12. The method of claim 10 or 11, wherein the delay(s) of the first signal is/are determined according to transmission distance(s) of the first signal, and the first phase offset(s) is/are determined according to the delay(s) of the first signal and frequency(frequencies) of the N subcarrier point(s).

13. The method of claim 10 or 11, wherein the Doppler frequency shift(s) of the first signal is/are determined according to a moving speed of a sensing target, and the second phase shift(s) is/are determined according to the Doppler frequency shift(s) of the first signal and a first time domain length.

14. The method of any one of claims 9 to 13, wherein the first time domain channel information is determined according to a result of performing a Fast Fourier Transform (FFT) or a Discrete Fourier Transform (DFT) on the first frequency domain channel information, and the second time domain channel information is determined according to a result of performing the FFT or the DFT on the second frequency domain channel information.

15. The method of any one of claims 9 to 14, wherein in a case that the first sensing information comprises the first time domain channel information and the second sensing information comprises the second time domain channel information, the first sensing result comprises a first delay,
wherein the first delay is used to determine a distance between a sensing target and the first node.

16. The method of any one of claims 9 to 14, wherein in a case that the first sensing information comprises the first delay-Doppler domain information and the second sensing information comprises the second delay-Doppler domain information, the first sensing result comprises a first distance and/or a first speed;
wherein the first distance represents a distance between a sensing target and the first node, and the first speed represents a moving speed of the sensing target.

17. The method of any one of claims 1 to 16, wherein
the first sensing information is measured by the first node, or the first sensing information is measured by another node; and
the second sensing information is measured by the first node, or the second sensing information is measured by the another node,
wherein the another node comprises a node other than the first node.

18. The method of any one of claims 1 to 17, further comprising:
reporting the first sensing result.

19. A sensing method, performed by a second node, and comprising:
receiving a first sensing result, wherein the first sensing result is determined according to a difference between first sensing information and second sensing information,
wherein the first sensing information corresponds to a first sensing resource, the second sensing information corresponds to a second sensing resource, and the first sensing resource is different from the second sensing resource.

20. The method of claim 19, wherein the first sensing result is determined according to remaining sensing information after removing the first sensing information from the second sensing information.

21. The method of claim 20, wherein the first sensing result is determined according to a remaining processing result after removing a first processing result from a second processing result,
wherein the second processing result comprises a result of performing a first processing on the second sensing information, the first processing result comprises a result of performing the first processing on the first sensing information, and the first processing includes at least one of following: filtering, denoising, or noise reduction.

22. The method of claim 20, wherein the first sensing result is determined according to a remaining part after removing a first part from a second part,
wherein the second part comprises a part, of the second sensing information, exceeding a first threshold, and the first part comprises a part, of the first sensing information, exceeding the first threshold.

23. The method of any one of claims 19 to 22, wherein
the first sensing information is an instantaneous measurement result or an average measurement result corresponding to the first sensing resource; and
the second sensing information is an instantaneous measurement result or an average measurement result corresponding to the second sensing resource.

24. The method of any one of claims 19 to 23, wherein the first sensing resource is orthogonal to the second sensing resource.

25. The method of claim 24, wherein the first sensing resource is orthogonal to the second sensing resource in a time domain.

26. The method of any one of claims 19 to 25, wherein no sensing target exists in the first sensing resource, and the first sensing result is a sensing result corresponding to the sensing target.

27. The method of any one of claims 19 to 26, wherein
the first sensing information comprises at least one of following information: first frequency domain channel information, first time domain channel information, or first delay-Doppler domain information; and/or
the second sensing information comprises at least one of following information: second frequency domain channel information, second time domain channel information, or second delay-Doppler domain information.

28. The method of claim 27, wherein
the first frequency domain channel information is determined according to at least one of following: channel response(s) corresponding to N subcarrier point(s) in the first sensing resource, first phase offset(s) corresponding to the N subcarrier point(s) in the first sensing resource, or second phase offset(s) corresponding to the N subcarrier point(s) in the first sensing resource;
the second frequency domain channel information is determined according to at least one of following: channel response(s) corresponding to the N subcarrier point(s) in the second sensing resource, first phase offset(s) corresponding to the N subcarrier point(s) in the second sensing resource, or second phase offset(s) corresponding to the N subcarrier point(s) in the second sensing resource; and
the first phase offset(s) is/are determined according to delay(s) of a first signal, the second phase offset(s) is/are determined according to Doppler frequency shift(s) of the first signal, the first signal is used to determine the first sensing result, and N is an integer greater than 0.

29. The method of claim 27 or 28, wherein
the first delay-Doppler domain information is determined according to at least one of following: channel response(s) corresponding to N subcarrier point(s) and M delay point(s) in the first sensing resource, first phase offset(s) corresponding to the N subcarrier point(s) and the M delay point(s) in the first sensing resource, or second phase offset(s) corresponding to the N subcarrier point(s) and the M delay point(s) in the first sensing resource;
the second delay-Doppler domain information is determined according to at least one of following: channel response(s) corresponding to the N subcarrier point(s) and the M delay point(s) in the second sensing resource, first phase offset(s) corresponding to the N subcarrier point(s) and the M delay point(s) in the second sensing resource, or second phase offset(s) corresponding to the N subcarrier point(s) and the M delay point(s) in the second sensing resource; and
the first phase offset(s) is/are determined according to delay(s) of the first signal, the second phase offset(s) is/are determined according to Doppler frequency shift(s) of the first signal, the first signal is used to determine the first sensing result, N is an integer greater than 0, and M is an integer greater than 0.

30. The method of claim 28 or 29, wherein the delay(s) of the first signal is/are determined according to transmission distance(s) of the first signal, and the first phase offset(s) is/are determined according to the delay(s) of the first signal and frequency(frequencies) of the N subcarrier point(s).

31. The method of claim 28 or 29, wherein the Doppler frequency shift(s) of the first signal is/are determined according to a moving speed of a sensing target, and the second phase shift(s) is/are determined according to the Doppler frequency shift(s) of the first signal and a first time domain length.

32. The method of any one of claims 27 to 31, wherein the first time domain channel information is determined according to a result of performing a Fast Fourier Transform (FFT) or a Discrete Fourier Transform (DFT) on the first frequency domain channel information, and the second time domain channel information is determined according to a result of performing the FFT or the DFT on the second frequency domain channel information.

33. The method of any one of claims 27 to 32, wherein in a case that the first sensing information comprises the first time domain channel information and the second sensing information comprises the second time domain channel information, the first sensing result comprises a first delay,
wherein the first delay is used to determine a distance between a sensing target and the first node.

34. The method of any one of claims 27 to 32, wherein in a case that the first sensing information comprises the first delay-Doppler domain information and the second sensing information comprises the second delay-Doppler domain information, the first sensing result comprises a first distance and/or a first speed;
wherein the first distance represents a distance between a sensing target and the first node, and the first speed represents a moving speed of the sensing target.

35. The method of any one of claims 19 to 34, wherein
the first sensing information is measured by the first node, or the first sensing information is measured by another node; and
the second sensing information is measured by the first node, or the second sensing information is measured by the another node,
wherein the another node comprises a node other than the first node.

36. A sensing apparatus comprising:
a processing module, configured to determine a first sensing result according to a difference between first sensing information and second sensing information,
wherein the first sensing information corresponds to a first sensing resource, the second sensing information corresponds to a second sensing resource, and the first sensing resource is different from the second sensing resource.

37. A sensing apparatus comprising:
a receiving module, configured to receive a first sensing result, wherein the first sensing result is determined according to a difference between first sensing information and second sensing information,
wherein the first sensing information corresponds to a first sensing resource, the second sensing information corresponds to a second sensing resource, and the first sensing resource is different from the second sensing resource.

38. A sensing device comprising: a processor; a transceiver connected to the processor; a memory for storing executable instructions for the processor; wherein the processor is configured to load and execute the executable instructions to implement the sensing method of any one of claims 1 to 18.

39. A sensing device comprising: a processor; a transceiver connected to the processor; a memory for storing executable instructions for the processor; wherein the processor is configured to load and execute the executable instructions to implement the sensing method of any one of claims 19 to 35.

40. A computer-readable storage medium, wherein a computer program is stored therein for execution by a processor to implement the sensing method of any one of claims 1 to 18, or to implement the sensing method of any one of claims 19 to 35.

41. A chip comprising programmable logic circuitry and/or program instructions, when the chip is run, implementing the sensing method of any one of claims 1 to 18, or implementing the sensing method of any one of claims 19 to 35.

42. A computer program product comprising computer instructions stored in a computer-readable storage medium from which a processor reads and executes the computer instructions to implement the sensing method of any one of claims 1 to 18, or to implement the sensing method of any one of claims 19 to 35.
